# FASCICULE DE BREVET EUROPEEN

(11) **EP 0 919 172 B1**
(45) Date de publication et mention de la délivrance du brevet: **24.09.2003**
(21) Numéro de dépôt: 98402962.9
(22) Date de dépôt: 25.11.1998
(51) Int. Cl.: A47J 37/06

(54) **Appareil électrique de cuisson**
Elektrisches Gargerät
Electric cooking apparatus

(30) Priorité: 28.11.1997 FR 9715049
(43) Date de publication de la demande: 02.06.1999
(73) Titulaire: SEB S.A., 69130 Ecully (FR)
(72) Inventeur: Bois, Bernard, 14000 Caen (FR); Baillieul, Philippe, 14280 ST Germain la Blanche Herbe (FR)
(74) Mandataire: Kiehl, Hubert

(56) Documents cités:
- EP-A- 0 617 909
- WO-A-90/11038
- DD-A- 153 518
- US-A- 3 527 154
- US-A- 3 811 375
- US-A- 4 862 795
- US-A- 5 176 067
- US-A- 5 621 198

## Description

La présente invention concerne un appareil électrique de cuisson comprenant un bâti présentant une large ouverture centrale, un bac de collecte associé audit bâti et comportant un fond, une grille de cuisson des aliments placée au-dessus du bac et une résistance chauffante électrique disposée sous la grille à l'aide d'un moyen de fixation et comprenant une poignée adaptée à reposer dans un logement du bâti.

Elle concerne notamment des appareils électriques de cuisson du type gril ou barbecue destinés plus particulièrement à être utilisés à l'intérieur d'une habitaion.

Les appareils connus comprennent généralement un bâti en un matériau plastique et un bac métallique amovible destiné à venir reposer par une bordure sur le bord supérieur du bâti et recevant l'ensemble grille-résistance. Ces appareils sont souvent coûteux à fabriquer du fait d'un nombre important de pièces et nécessitent des précautions d'usage, notamment la présence d'eau dans le bac de collecte, pour éviter tout risque d'incendie dû, par exemple, à un échauffement trop important du plan de travail sur lequel repose l'appareil de cuisson.

Le document W09011038 décrit un appareil de cuisson dont la surface de cuisson est une pierre ollaire. L'appareil comprend un support constitué d'un caisson présentant une large ouverture centrale, un bac de collecte associé au caisson et comportant un fond, une pierre de cuisson placée au dessus du bac et une résistance électrique disposée sous la pierre. Le caisson comporte une double paroi et repose sur un boîtier ayant des poignées. La face interne du caisson tournée vers la pierre est revêtue d'un matériau réfléchissant au moins sur sa partie latérale inclinée. Mais cet appareil comporte beaucoup de pièces ce qui en renchérit le coût, la résistance n'est pas amovible à l'aide d'une poignée et aucun revêtement protecteur ne facilite le nettoyage

Le document US5621198 décrit un barbecue comprenant une base, et une résistance électrique amovible solidaire d'une poignée adaptée à reposer dans un logement de la base. L'amovibilité de la résistance permet un nettoyage aisé du reste de l'appareil, en particulier de la base, après utilisation. Mais la pièce de base n'est pas protégée par un revêtement qui limiterait les problèmes de corrosion et faciliterait le nettoyage.

La présente invention a pour but de remédier aux inconvénients précités. Elle permet notamment d'obtenir un appareil de cuisson fiable, peu coûteux et présentant les conditions de sécurité pour la cuisson des aliments à l'intérieur d'une habitation.

Selon l'invention, le bâti et le bac de collecte sont conformés en une pièce unique en matériau métallique, et la face interne du fond tournée vers la résistance présente une surface formant réflecteur.

Ainsi, grâce à la surface formant réflecteur, on améliore le rayonnement de la résistance tout en minimisant les élévations anormales de la température du bac pour éviter toute détérioration des éléments extérieurs placés à proximité de l'appareil notamment le plan de travail sur lequel l'appareil 1 repose. De plus, la fabrication d'une seule pièce pour réaliser le bâti et le bac de collecte diminue considérablement le prix de revient d'un tel appareil.

Selon une autre caractéristique de l'invention, la pièce unique comportant la face interne et une face externe, lesdites faces interne et externe sont recouvertes d'un revêtement en laissant au moins la face interne du fond au niveau de la surface formant réflecteur dépourvue dudit revêtement.

Ainsi, le revêtement recouvrant la pièce métallique permet d'augmenter la durée de vie d'un tel appareil en limitant les problèmes de corrosion après nettoyage, et facilite l'enlèvement des graisses occasionnées lors d'une cuisson.

Les caractéristiques et avantages de l'invention ressortiront d'ailleurs de la description qui va suivre, prise à titre d'exemple non limitatif en référence au dessin annexé dans lequel
- la figure 1 est une vue éclatée d'un appareil de cuisson selon l'invention,
- la figure 2 est une vue partielle en coupe verticale à échelle agrandie illustrant un bâti et un bac de collecte formant une pièce unique selon l'invention.

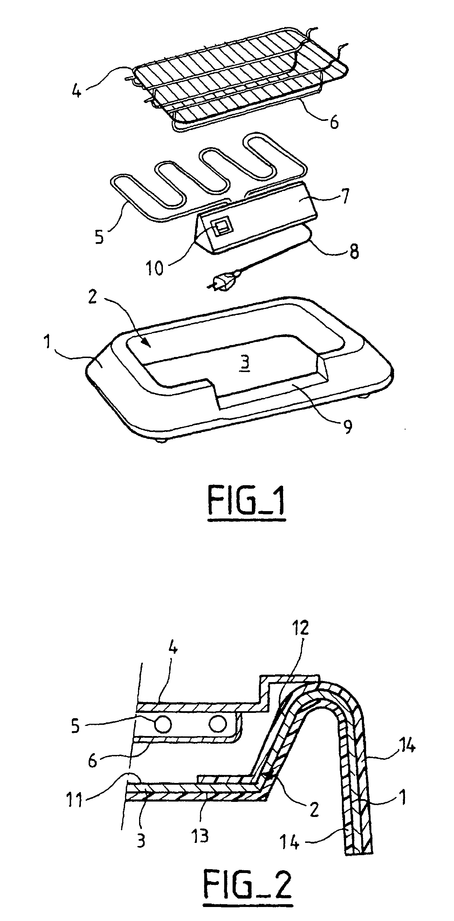

L'appareil de cuisson représenté à la figure 1 est un gril du type horizontal et comprend un bâti 1 présentant une large ouverture centrale, un bac de collecte 2 associé audit bâti 1 et comportant un fond 3 susceptible de contenir de l'eau de manière à éviter les fumées occasionnées par la récupération des graisses de cuisson, une grille 4 de cuisson des aliments placés au-dessus du bac 2 ainsi qu'une résistance chauffante électrique 5 du type résistance blindée conformée selon un parcours sinueux s'étendant dans un plan et disposée sous la grille 4 à l'aide d'un moyen de fixation 6. Dans l'exemple représenté, le moyen de fixation 6 est un support solidaire de cette grille 4 mais tout moyen de fixation 6 de type connu est utilisable. Les extrémités de la résistance chauffante électrique 5 sont montées dans une poignée creuse 7 réalisée en un matériau isolant thermique et sont reliées à une source d'alimentation électrique telle que par exemple le secteur 230 volts au moyen d'un cordon électrique 8. La résistance électrique chauffante 5 est, par exemple, une résistance électrique de 2000 W pour permettre d'obtenir un grillage très puissant et rapide. La poignée 7 est adaptée à reposer dans un logement 9 du bâti 1 et comporte un interrupteur 10 de commande de fonctionnement de la résistance électrique chauffante 5 dont la fermeture est déclenchée par l'utilisateur.

Selon l'invention, le bâti 1 et le bac de collecte 2 sont conformés en une pièce unique en matériau métallique, et la face interne 12 du fond 3 tournée vers la résistance présente une surface 11 formant réflecteur. La pièce unique est, par exemple, en tôle aluminiée. Dans un exemple de réalisation, la pièce unique est formée par emboutissage et présente la forme d'un cadre à fond fermé. Un des tronçons du cadre comprend le logement 9 recevant La poignée 7 et présente une forme complémentaire à celle de la poignée 7 pour autoriser son emboîtement.

Ainsi, grâce à cette nouvelle conception, on obtient un appareil 1 de cuisson facile à fabriquer tout en respectant les normes de fonctionnement d'un tel appareil. En effet, la réalisation du bâti 1 et du bac de collecte 2 en une seule pièce avec une surface formant réflecteur évite la réalisation de deux pièces différentes minimisant ainsi les coûts de fabrication et facilitant la rapidité de nettoyage de l'appareil de cuisson. De plus, l'intégration de la surface 11 formant réflecteur sur la même pièce permet de respecter les normes de fonctionnement d'un tel appareil notamment les normes concernant les échauffements du plan de travail sur lequel repose l'appareil de cuisson ; en absence d'eau dans le bac de collecte 2, la température du plan de travail ne doit pas dépasser 65 K.

Selon une autre caractéristique de l'invention et comme cela est représenté sur la figure 2, la pièce unique comporte la face interne 12 et une face externe 13 qui sont recouvertes d'un revêtement 14 en laissant au moins la face interne 12 au niveau de la surface 11 formant réflecteur dépourvue dudit revêtement 14. Un tel revêtement est de préférence un émail mais une peinture haute température est également envisageable.

Ainsi, grâce à ce revêtement, on supprime les problêmes de corrosion sur un tel appareil de cuisson et on améliore les normes concernant les échauffements du bâti; les zones de préhension de l'appareil de cuisson ne doivent pas dépasser 60 K. De plus, le revêtement étant généralement anti-adhérent, on facilite le nettoyage de l'appareil de cuisson après usage.

Dans un mode de réalisation préférentiel, la face externe 13 au niveau de la surface 11 formant réflecteur est également dépourvue du revêtement 14 améliorant ainsi la diffusion thermique dans la masse du bâti de la pièce unique.

Le fonctionnement de l'appareil de cuisson va maintenant être décrit au regard des figures 1 et 2 et nous supposerons que l'appareil représenté en pièces détachées fait suite, par exemple, à un démontage pour un nettoyage après une cuisson.

L'utilisateur prend le bâti et le bac de collecte formant une pièce unique et le positionne sur le plan de travail. Puis l'utilisateur après avoir fixé la résistance électrique chauffante 5 sur la grille 4 introduit par le haut l'ensemble ainsi formé de manière à emboîter la poignée 7 dans son logement 9 ainsi que la mise en place de la grille 4 sur le bord de la pièce unique. Ainsi l'utilisateur peut actionner l'interrupteur 10 autorisant l'alimentation électrique de la résistance 5.

Grâce à un tel appareil de cuisson, on facilite son montage en minimisant le nombre de pièces à mettre en place sur la pièce unique tout en respectant les normes de sécurité en vigueur.

## Revendications

1. Appareil électrique de cuisson comprenant un bâti (1)présentant une large ouverture centrale, un bac de collecte (2) associé audit bâti et comportant un fond (3), une grille (4) de cuisson des aliments placée au-dessus du bac (2) et une résistance chauffante électrique (5) disposée sous la grille (4) à l'aide d'un moyen de fixation (6) et comprenant une poignée (7) adaptée à reposer dans un logement (9) du bâti (1), le bâti (1) et le bac de collecte (2) étant conformés en une pièce unique en matériau métallique, et la face interne (12) du fond (3) tournée vers la résistance (5) présentant une surface (11) formant réflecteur **caractérisé en ce que** la pièce unique comportant une face externe (13), les dites faces interne (12) et externe (13) sont recouvertes d'un revêtement (14) limitant les problèmes de corrosion, en laissant au moins la face interne (12) du fond (3) au niveau de la surface (11) formant réflecteur dépourvue dudit revêtement (14).

2. Appareil électrique de cuisson selon la revendication 1, **caractérisé en ce que** le revêtement (14) facilite l'enlèvement des graisses occasionnées lors d'une cuisson.

3. Appareil électrique de cuisson selon l'une des revendications précédentes, **caractérisé en ce que** le revêtement (14) limite les échauffements des zones de préhension de l'appareil.

4. Appareil électrique de cuisson selon l'une des revendications précédentes, **caractérisé en ce que** la face externe (13) au niveau de la surface (11) du fond (3) formant réflecteur est dépourvue du revêtement (14).

5. Appareil électrique de cuisson selon l'une des revendications précédentes, **caractérisé en ce que** le revêtement (14) est un émail.

6. Appareil électrique de cuisson selon l'une des revendications 1 à 4, **caractérisé en ce que** le revêtement (14) est une peinture haute température.

7. Appareil électrique de cuisson selon l'une des revendications précédentes, **caractérisé en ce que** la surface (11) formant réflecteur constitue la majeure partie du fond du bac de collecte (2).

8. Appareil électrique de cuisson selon l'une quelconque des revendications précédentes, **caractérisé en ce que** la pièce unique en matériau métallique est une tôle aluminée.

9. Appareil électrique de cuisson selon l'une quelconque des revendications précédentes, **caractérisé en ce que** la pièce unique est formée par emboutissage et présente la forme d'un cadre à fond fermé.

## Patentansprüche

1. Elektrisches Gargerät mit einem Gehäuse (1), das eine breite zentrale Öffnung aufweist, einem Sammelkasten (2), der dem Gehäuse zugeordnet ist und einen Boden (3) aufweist, einem Rost (4) zum Garen der Nahrungsmittel, der über den Kasten (2) gesetzt ist, und einem elektrischen Heizwiderstand (5), der unter dem Rost (4) mit Hilfe eines Befestigungsmittels (6) angeordnet ist und einen Griff (7) aufweist, der dazu geeignet ist, in einer Aufnahme (9) des Gehäuses (1) zu ruhen, wobei das Gehäuse (1) und der Sammelkasten (2) in einem einzigen Teil aus Metallmaterial geformt sind und die Innenseite (12) des Bodens (3), die dem Widerstand (5) zugewandt ist, eine einen Reflektor bildende Fläche (11) aufweist, **dadurch gekennzeichnet, daß** das einzige Teil eine Außenseite (13) aufweist und die Innenseite (12) und die Außenseite (13) mit einer Beschichtung (14) überdeckt sind, die Korrosionsprobleme begrenzt, wobei sie wenigstens die Innenseite (12) des Bodens (3) auf Höhe der einen Reflektor bildenden Fläche (11) ohne die Beschichtung (14) verbleibt.

2. Elektrisches Gargerät nach Anspruch 1, **dadurch gekennzeichnet, daß** durch die Beschichtung (14) die Fette leicht entfernt werden können, die bei einem Garen auftreten.

3. Elektrisches Gargerät nach einem der vorhergehenden Ansprüche, **dadurch gekennzeichnet, daß** die Beschichtung (14) die Erwärmung der Greifzonen der Vorrichtung begrenzt.

4. Elektrisches Gargerät nach einem der vorhergehenden Ansprüche, **dadurch gekennzeichnet, daß** die Außenseite (13) auf Höhe der einen Reflektor bildenden Fläche (11) des Bodens (3) ohne Beschichtung (14) ist.

5. Elektrisches Gargerät nach einem der vorhergehenden Ansprüche, **dadurch gekennzeichnet, daß** die Beschichtung (14) ein Email ist.

6. Elektrisches Gargerät nach einem der Ansprüche 1 bis 4, **dadurch gekennzeichnet, daß** die Beschichtung (14) ein Hochtemperaturtemperaturanstrich ist.

7. Elektrisches Gargerät nach einem der vorhergehenden Ansprüche, **dadurch gekennzeichnet, daß** die einen Reflektor bildende Fläche (11) den größten Teil des Bodens des Sammelkastens (2) bildet.

8. Elektrisches Gargerät nach einem der vorhergehenden Ansprüche, **dadurch gekennzeichnet, daß** das einzige Teil aus Metallmaterial ein aluminisiertes Blech ist.

9. Elektrisches Gargerät nach einem der vorhergehenden Ansprüche, **dadurch gekennzeichnet, daß** das einzige Teil durch Tiefziehen gebildet ist und die Form eines Rahmens mit geschlossenem Boden aufweist.

## Claims

1. An electric cooking appliance comprising a stand (1) presenting a large central opening, a drip tray (2) associated with said stand and including a bottom (3), a food cooking grill (4) placed over the tray (2) and an electric heater element (5) placed under the grill (4) by fixing means (6) and including a handle (7) adapted to rest in a housing of the stand (1), the stand (1) and the drip tray (2) being shaped as a single piece of metal, and the inside face (12) of the bottom (3) facing the element (5) presenting a reflector-forming surface (11), the appliance being **characterized in that** the single piece having an outside face (13), said inside and outside faces (12, 13) are covered in a covering (14) limiting problems of corrosion, leaving at least the inside face (12) of the bottom (3) over the reflector-forming surface (11) not covered by said covering (14).

2. An electric cooking appliance according to claim 1, **characterized in that** the covering (14) facilitates the removal of grease due to cooking.

3. An electric cooking appliance according to either preceding claim, **characterized in that** the covering (14) limits heating of handling zones of the appliance.

4. An electric cooking appliance according to any preceding claim, **characterized in that** the outside face (13) in register with the reflector-forming surface (11) of the bottom (3) is not covered in the covering (14).

5. An electric cooking appliance according to any preceding claim, **characterized in that** the covering (14) is an enamel.

6. An electric cooling appliance according to any one of claims 1 to 4, **characterized in that** the covering (14) is a high-temperature paint.

7. An electric cooking appliance according to any preceding claim, **characterized in that** the reflector-forming surface (11) constitutes the major fraction of the bottom of the drip tray (2).

8. An electric cooking appliance according to any preceding claim, **characterized in that** the single piece of metal is aluminum-coated sheet metal.

9. An electric cooking appliance according to any preceding claim, **characterized in that** the single piece is formed by stamping and is in the shape of a frame with a closed bottom.
